# EUROPÄISCHE PATENTSCHRIFT

(11) **EP 1 316 771 B1**
(45) Veröffentlichungstag und Bekanntmachung des Hinweises auf die Patenterteilung: **01.12.2010**
(21) Anmeldenummer: 02026293.7
(22) Anmeldetag: 27.11.2002
(51) Int. Cl.: F28D 20/00, H01M 8/04, F24H 1/00

(54) **Anlage zur gleichzeitigen Erzeugung von elektrischer und thermischer Energie mit einem Brennstoffzellenheizgerät**
System for simultaneous production of electrical and thermal energy by means of a fuel cell heating device
Système pour la production simultanée d'énergie électrique et thermique avec un dispositif chauffant ayant des piles à combustible

(30) Priorität: 03.12.2001 AT 18782001
(43) Veröffentlichungstag der Anmeldung: 04.06.2003
(73) Patentinhaber: Vaillant GmbH, 42859 Remscheid (DE)
(72) Erfinder: Kohlhage, Jörg, 33790 Halle (DE); Noll, Wolfgang, 42369 Wuppertal (DE); Thomas, Rolf, 42929 Wermelskirchen (DE)
(74) Vertreter: Hocker, Thomas

(56) Entgegenhaltungen:
- DE-A1- 19 747 592
- PATENT ABSTRACTS OF JAPAN Bd. 017, Nr. 480 (E-1425), 31. August 1993 (1993-08-31) & JP 05 121081 A (SHIMIZU CORP), 18. Mai 1993 (1993-05-18)
- PATENT ABSTRACTS OF JAPAN Bd. 2000, Nr. 22, 9. März 2001 (2001-03-09) & JP 2001 135321 A (MATSUSHITA REFRIG CO LTD), 18. Mai 2001 (2001-05-18)
- PATENT ABSTRACTS OF JAPAN Bd. 2002, Nr. 07, 3. Juli 2002 (2002-07-03) & JP 2002 075390 A (TOYOTA INDUSTRIES CORP), 15. März 2002 (2002-03-15)
- PATENT ABSTRACTS OF JAPAN Bd. 1995, Nr. 11, 26. Dezember 1995 (1995-12-26) & JP 07 220745 A (SANYO ELECTRIC CO LTD), 18. August 1995 (1995-08-18)

## Beschreibung

Die Erfindung bezieht sich auf eine Anlage zur gleichzeitigen Erzeugung von elektrischer und thermischer Energie mit einem Brennstoffzellenheizgerät und einer Vorrichtung zum Speichern von thermischer Energie.

Brennstoffzellenanlagen, welche über einen Reformer mit wasserstoffreichem Brenngas versorgt werden, sollten möglichst nicht taktend, sondern vielmehr mit langen Laufzeiten betrieben werden, da das Anfahren der Anlage den Verschleiß des Reformers fördert und mit Energieverlusten behaftet ist.

Da nicht stets eine konstante Energiemenge benötigt wird, kann ein Abschalten einerseits dadurch vermieden werden, dass die Anlage temporär modulierend, d.h. mit Teillast betrieben wird. Da jedoch das Verhältnis zwischen angeforderter Wärme und angefordertem Strom nicht konstant ist, muss die nicht benötigte Energie abgeführt oder zwischengespeichert werden. Stromspeicher sind zur Zeit nicht wirtschaftlich, so dass man bei Brennstoffzellenanlagen überschüssigen Strom in der Regel in das Netz einspeist.

Es ist bekannt, Brennstoffzellenanlagen mit Warmwasserspeichern zum Speichern thermischer Energie zu koppeln. In der JP 2000319007 ist ein Reformer für Brennstoffellen beschreiben, bei dem ein Warmwasserspeicher zum Erhitzen des Reformers beim Start benutzt wird. In den Schriften JP 2001135321, JP 11099044 und JP 63168972 sind jeweils Brennstoffzellensysteme mit jeweils einem Warmwasserspeicher zum Speichern thermischer Energie beschrieben. Hierbei ist es jeweils nur möglich, Wärme auf einem Temperaturniveau zu speichern.

Um viel Wärme speichern zu können, sind große Wärmespeicher erforderlich. Wird ein großer Wärmespeicher aus dem kalten Zustand geladen, so ergibt sich das Problem, dass zunächst auch nur Wärme auf einem niedrigen Temperaturniveau zur Verfügung steht. Wird der Wärmespeicher auf einem für Warmwasserkomfort und Hygiene (z.B. Vermeidung von Legionellen) notwendigen Niveau betrieben, so kann kaum noch Wärme aufgenommen werden.

Die JP 05121081 zeigt eine Brennstoffzelle, deren Abwärme zum Beheizen eines Warmwasserspeichers genutzt wird. In einem nachgeschalteten elektrischen Durchlauferhitzer wird Wasser auf eine Solltemperatur erhitzt und in einem weiteren Speicher bevorratet. JP 2001135321 offenbart eine Brennstoffzelle, deren Abwärme zum Beheizen eines Warmwasserspeichers genutzt wird. Eine Kühleinrichtung wird durch die Brennstoffzelle mit elektrischer Energie versorgt. Die Abwärme der Kühleinrichtung wird in einen zweiten Wasserspeicher geleitet. Warmwasser wird durch beide Speicher geleitet und hierbei erhitzt. JP 07220745 beschreibt eine Brennstoffzelle, deren Abwärme in einem Warmwasserspeicher gespeichert wird. Wird Wasser mit höherer Temperatur benötigt, so wird das Wasser aus dem Speicher in einem durchströmten Zusatzheizgerät nacherhitzt bevor es an die Zapfstellen gelangt. DE 197 47 592 A1 zeigt eine Heizungsanlage mit Solarkollektor, zwei Warmwasserspeichern und einer Zusatzheizung. Mittels Zusatzheizung kann somit das von dem Solarkollektor erwärmte Brauchwasser auf die Brauchwassersolltemperatur erhitzt werden.

Ziel der Erfindung ist es, die Nachteile des Standes der Technik zu vermeiden und eine Anlage zur gleichzeitigen Erzeugung von elektrischer und thermischer Energie mit einem Brennstoffzellenheizgerät und einer Vorrichtung zum Speichern von thermischer Energie der eingangs erwähnten Art vorzuschlagen, die sich durch hohe Aufnahmefähigkeit von thermischer Energie bei gleichzeitig hohem Temperaturniveau des zur Verfügung stehenden Brauch- und Warmwassers auszeichnet.

Erfindungsgemäß wird dies bei einer Anlage gemäß dem unabhängigen Anspruch 1 dadurch erreicht, dass die Anlage zwei beheizbare Warmwasserspeicher enthält. Hierdurch ist es möglich, dass ein Speicher vorwiegend zur Aufnahme großer Wärmemengen dient, während der andere Speicher den Komfort- und Hygieneanforderungen gerecht wird. Es ergibt sich der Vorteil, dass in einem Speicher eine Vorheizung erfolgen kann, während der zweite Speicher für die Solltemperaturerreichung zuständig ist. Somit kann der erste Speicher in einer Temperaturbandbreite zwischen der Brauchwassereintrittstemperatur und der Brauchwassersolltemperatur betrieben werden.

Durch die Merkmale des Anspruchs 3 wird erreicht, dass eine große Kapazität zur Aufnahme von Wärme auf einem Niveau unterhalb der Brauchwassersolltemperatur zur Verfügung steht während gleichzeitig der kleinere Speicher eine schnelle Erwärmung auf Solltemperatur ermöglicht.

Gemäß den Merkmalen des Anspruchs 4 kann bei einem hohen Wärmebedarf oder bei einem Stillstand des Brennstoffzellenheizgerätes Wärme von einem Zusatzheizgerät erzeugt werden.

Durch die Merkmale des Anspruchs 5 wird erreicht, dass der Warmwasserspeicher auf der Ausgangsseite des Brauchwassers auf Temperaturen, welche oberhalb der von Brennstoffzellenkühlkreisläufen liegen, aufgeheizt werden kann und schnelle Aufheizungen möglich sind.

Durch die Merkmale des Anspruchs 6 wird erreicht, dass auch in der Nachheizstufe viel Wärme des Brennstoffzellenheizgerätes verwendet werden kann.

Gemäß den Merkmalen des Anspruchs 7 ergibt sich der Vorteil, dass der Warmwasserspeicher auf der Eingangsseite des Brauchwassers je nach Betriebsart des Brennstoffzellenheizgerätes beliebig geladen werden kann. Währenddessen kann dennoch den Komfort- und Hygieneerfordernissen durch die Gesamtanlage entsprochen werden.

Durch die Merkmale des Anspruchs 8 wird erreicht, dass der Warmwasserspeicher auf der Eingangsseite des Brauchwassers beispielsweise auch bei Stillstand des Brennstoffzellenheizgeräts, zum Zwecke des rascheren Aufheizens oder zur Legionellenbekämpfung vom Zusatzheizgerät beheizt werden kann.

Anspruch 9 schützt - wie Anspruch 7 - die Beheizung des Warmwasserspeichers auf der Eingangsseite des Brauchwassers mittels Brennstoffzellenheizgerät. Während Anspruch 7 eine Durchströmung des Wärmeaustauschers im Speicher vorzugsweise mit Umlaufwasser vorsieht und sich somit Brauchwasser im Speichervolumen befindet, ist in Anspruch 9 eine Speicherung von Brauchwasser im Speichervolumen und eine Durchströmung des Wärmeaustauschers mit Brauchwasser vorgesehen.

Durch die Merkmale des Anspruchs 10 wird erreicht, dass gleichzeitig oder getrennt das Brennstoffzellenheizgerät und das Zusatzheizgerät - sogar auf unterschiedlichem Temperaturniveau des durch die beiden strömenden Heizmediums - ohne zusätzliche Ventile und Regeleinrichtungen betrieben werden können.

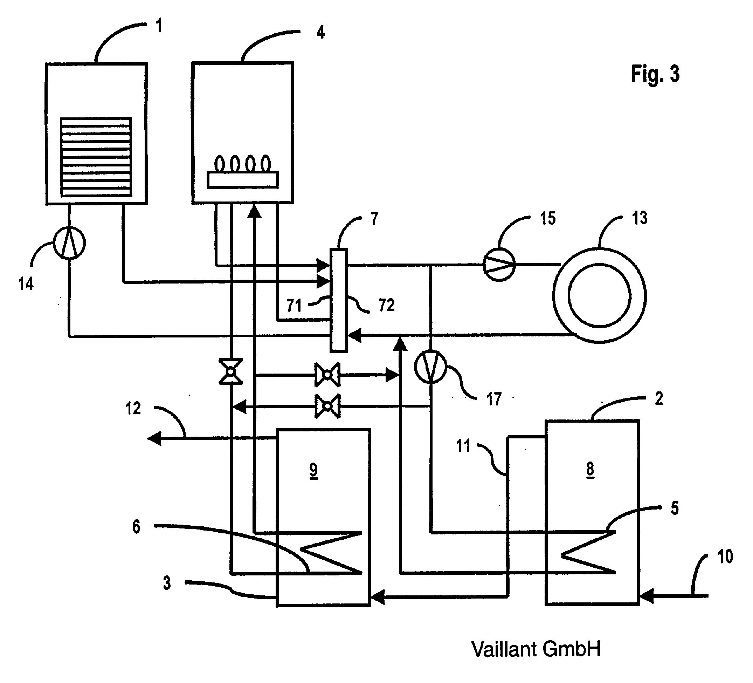

Fig. 3 eine weitere Variante einer erfindungsgemäßen Heizungsanlage.

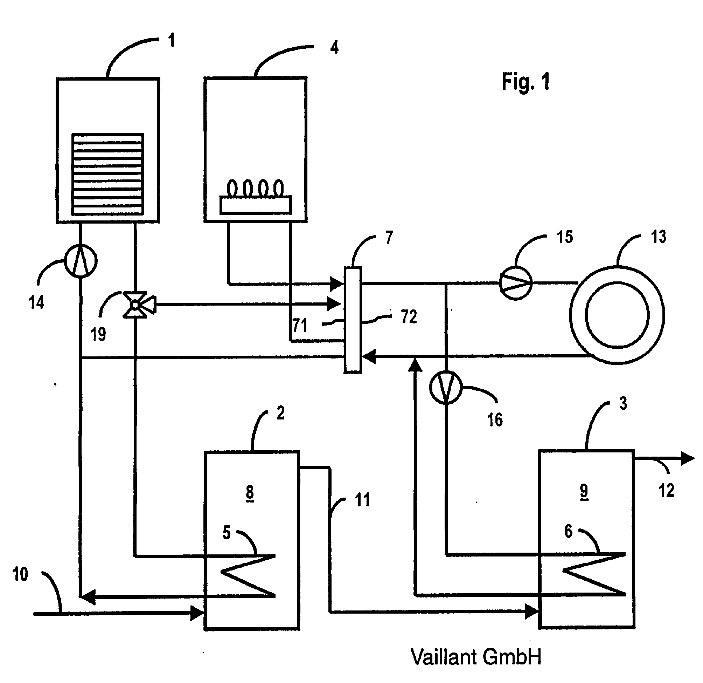

Figur 1 zeigt ein Brennstoffzellenheizgerät 1, das parallel sowohl mit einem Wärmeaustauscher 5 in einem Warmwasserspeicher 2, als auch mit einer hydraulischen Weiche 7 auf deren Primärseite 71 verbunden ist, wobei ein Umschaltventil 19 sowohl die Durchströmung des Speichers 2 und der hydraulischen Weiche 7, als nur des Speichers 2 oder der hydraulischen Weiche 7 zuläßt. Eine Pumpe 14 ist für das Fördern von Wärmeträgermedium durch das Brennstoffzellenheizgerät 1 vorhanden. An die hydraulische Weiche 7 ist auf der Primärseite 71 auch ein Zusatzheizgerät 4 parallel zum Speicher 2 und dem Brennstoffzellenheizgerät 1 angeschlossen. Auf der Sekundärseite 72 der hydraulischen Weiche 7 sind parallel ein Heiznetz 13 und ein zweiter Wärmeaustauscher 6 eines zweiten Warmwasserspeichers 3 jeweils mit eigener Umwälzpumpe 15, 16 angeschlossen. In das Speichervolumen 8 des Warmwasserspeichers 2 führt im unteren Bereich eine Brauchwassereintrittsleitung 10. Vom Speichervolumen 8 des Warmwasserspeichers 2 führt im oberen Bereich eine Brauchwasserverbindungsleitung 11 in den unteren Bereich des Speichervolumens 9 des Warmwasserspeichers 3. Aus dem oberen Bereich des Speichervolumens 9 des Warmwasserspeichers 3 führt eine Brauchwasseraustrittsleitung 12.

Eine hydraulische Weiche 7 besteht aus einem Hohlkörper, bei dem sich auf gegenüberliegenden Seiten, der Primärseite 71 und Sekundärseite 72, Anschlüsse gegenüberstehen. Über den Hohlraum besteht eine Verbindung zwischen allen Anschlüssen. Die Verteilung von Volumenströmen von einem Anschluss auf andere Anschlüsse erfolgt gemäß der Druckverhältnisse und Druckverluste. Hierdurch wird ein aufwendiges Regelungssystem für Ventile zur Verteilung der Volumenströme vermieden.

Ist das Brennstoffzellenheizgerät 1 in Betrieb und produziert Strom und Wärme, so kann die Wärme entweder zum Warmwasserspeicher 2 oder der hydraulischen Weiche 7 übertragen werden. Es ist auch möglich, die Wärme sowohl zum Warmwasserspeicher 2 als auch der hydraulischen Weiche 7 zu übertragen. Auf die Stromproduktion und ihre Abnahme wird hier nicht eingegangen. Da das Speichervolumen 8 des Warmwasserspeichers 2 sehr groß ist, kann der Warmwasserspeicher 2 viel Wärme aufnehmen. In dem Warmwasserspeicher 2 befindet sich Brauchwasser, das durch die Brauchwassereintrittsleitung 11 in den Warmwasserspeichers 2 gelangt. Das Brauchwasser wird durch den Wärmeaustauscher 5 von dem im Brennstoffzellenheizgerät 1 erhitzen Wasser erwärmt.

Ebenfalls von dem im Brennstoffzellenheizgerät 1 erhitzen Wasser kann über die hydraulische Weiche 7 Wärme auf der Sekundärseite 72 auf das Heiznetz 13 oder den Warmwasserspeicher 3 übertragen werden. Das Speichervolumen 9 des Warmwasserspeichers 3 wird über die Brauchwasserverbindung 11 mit aus dem Warmwasserspeicher 2 vorgewärmtem Brauchwasser gefüllt. Die Wärme, welche notwendig ist, um das Brauchwasser auf Solltemperatur zu erwärmen, wird von dem Wärmeaustauscher 6 auf das Brauchwasser übertragen. Das erhitzte Brauchwasser gelangt über den Brauchwasseraustritt 12 an nicht dargestellte Zapfstellen. Kann das Brennstoffzellenheizgerät 1 nicht genügend Wärme zur Verfügung stellen, so wird es vom Zusatzheizgerät 4 unterstützt. Ist der Warmwasserspeicher 2 geladen und der Warmwasserspeicher 3 kühler, so kann Wärme vom Wärmeaustauscher 5 des Warmwasserspeichers 2 über das Umschaltventil 19, die hydraulische Weiche 7, die Umwälzpumpe 16 auf den Wärmeaustauscher 6 des Warmwasserspeichers 3 übertragen werden.

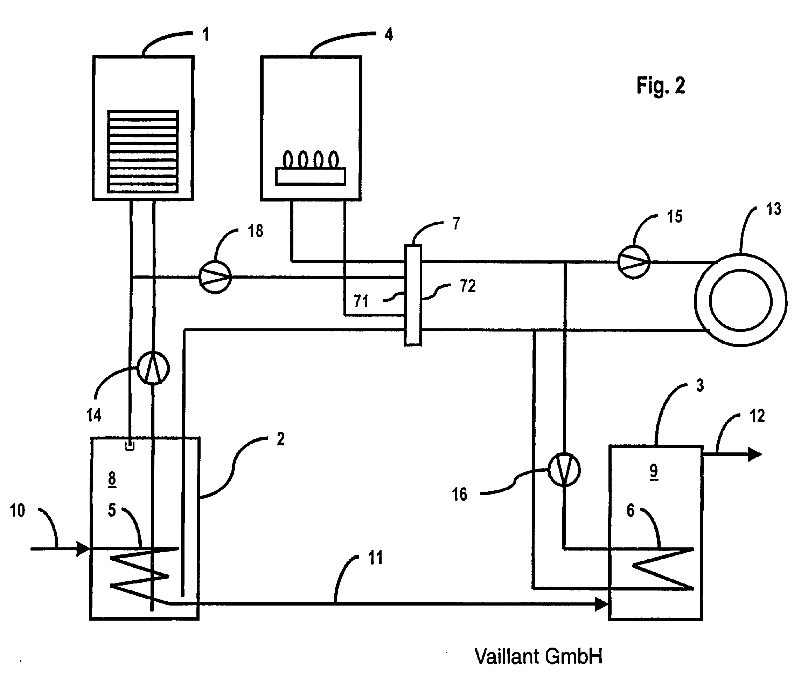

Fig. 2 unterscheidet sich von Fig. 1 hauptsächlich dadurch, dass der Warmwasserspeicher 2 nicht - wie in Fig. 1 - als Brauchwasserspeicher, sondern vielmehr als Heizwasser-Schichtenspeicher ausgelegt ist. Somit wird die Wärme im Warmwasserspeicher 2 im Heizungswasser gespeichert. Das Brauchwasser wird im Wärmeaustauscher 5 im Warmwasserspeicher 2 erhitzt und dann zum Warmwasserspeicher 6 geleitet, wo es im Speichervolumen 9 gespeichert und vom Wärmeaustauscher 6 erhitzt wird. Eine Umwälzpumpe 18 verursacht einen Warmwasserfluß von dem Brennstoffzellenheizgerät 1 und dem Warmwasserspeicher 2 zur hydraulischen Weiche 7.

In Fig. 3 befindet sich der Warmwasserspeicher 2 auf der Sekundärseite 72 der hydraulischen Weiche 7 und kann sowohl vom Brennstoffzellenheizgerät 1, als auch dem Zusatzheizgerät 4 beheizt werden. Eine Umwälzpumpe 17 sorgt für die Durchströmung des Wärmeaustauschers 5. Der Warmwasserspeicher 3 wird entweder direkt vom Heizwasser des Zusatzheizgerät 4 oder mittels Wärme aus dem Warmwasserspeicher 2 beheizt. Das Brauchwasser wird jeweils in den Speichervolumina 8, 9 der Warmwasserspeicher 2, 3 gespeichert und erwärmt.

### Bezugszeichenliste

- 1: Brennstoffzellenheizgerät
- 2: Warmwasserspeicher
- 3: Warmwasserspeicher
- 4: Zusatzheizgerät
- 5: Wärmeaustauscher
- 6: Wärmeaustauscher
- 7: Hydraulische Weiche
- 8: Speichervolumen
- 9: Speichervolumen
- 10: Brauchwassereintritt
- 11: Brauchwasserverbindung
- 12: Brauchwasseraustritt
- 13: Heiznetz
- 14: Umwälzpumpe
- 15: Umwälzpumpe
- 16: Umwälzpumpe
- 17: Umwälzpumpe
- 18: Umwälzpumpe
- 19: Umschaltventil
- 20:
- 21:
- 22:
- 71: Primärseite
- 72: Sekundärseite

## Patentansprüche

1. Anlage zur gleichzeitigen Erzeugung von elektrischer und thermischer Energie mit einem Brennstoffzellenheizgerät (1), vorzugsweise mit Reformer zur Herstellung von wasserstoffreichem Prozessgas aus Kohlenwasserstoffen, und einer Vorrichtung zum Speichern von thermischer Energie für Brauchwasser und Heizung, **dadurch gekennzeichnet, dass** die Vorrichtung zum Speichern thermischer Energie mindestens zwei Warmwasserspeicher (2, 3) mit integrierten Wärmeaustauschern (5, 6) umfasst, wobei die mindestens zwei Warmwasserspeicher (2, 3) mit integrierten Wärmeaustauschern (5, 6) parallel mit dem Brennstoffzellenheizgerät (1) verbunden sind und bezüglich der Brauchwasserdurchströmung in Reihe geschaltet sind.

2. Anlage gemäß Anspruch 1, **dadurch gekennzeichnet, dass** zwischen dem Brennstoffzellenheizgerät (1) und mindestens einem Warmwasserspeicher (3) eine hydraulische Weiche (7) angeordnet ist

3. Anlage gemäß Anspruch 2, **dadurch gekennzeichnet, dass** der Warmwasserspeicher (2) auf der Eingangsseite des Brauchwassers über ein größeres Speichervolumen verfügt als der Warmwasserspeicher (3) auf der Ausgangsseite des Brauchwassers.

4. Anlage gemäß einem der Ansprüche 1 bis 3, **dadurch gekennzeichnet, dass** ein mit Brenngas oder Öl betriebenes Zusatzheizgerät (4) integriert ist.

5. Anlage gemäß Anspruch 4, **dadurch gekennzeichnet, dass** der Wärmeaustauscher (6) des Warmwasserspeichers (3) auf der Ausgangsseite des Brauchwassers von einem im Zusatzheizgerät (4) erwärmten Wärmeträgermedium durchströmt wird.

6. Anlage gemäß Anspruch 4 oder 5, **dadurch gekennzeichnet, dass** der Wärmeaustauscher (6) des Warmwasserspeichers (3) auf der Ausgangsseite des Brauchwassers von einem im Brennstoffzellenheizgerät (1) erwärmten Wärmeträgermedium durchströmt wird.

7. Anlage gemäß einem der Ansprüche 2 bis 6, **dadurch gekennzeichnet, dass** der Wärmeaustauscher (5) des Warmwasserspeichers (2) auf der Eingangsseite des Brauchwassers von einem im Brennstoffzellenheizgerät (1) erwärmten Wärmeträgermedium durchströmt wird.

8. Anlage gemäß einem der Ansprüche 4 bis 6, **dadurch gekennzeichnet, dass** der Wärmeaustauscher (5) des Warmwasserspeichers (2) auf der Eingangsseite des Brauchwassers von einem im Zusatzheizgerät (4) erwärmten Wärmeträgermedium durchströmt wird.

9. Anlage gemäß einem der Ansprüche 2 bis 6, **dadurch gekennzeichnet, dass** das Speichervolumen (8) des Warmwasserspeichers (2) auf der Eingangsseite des Brauchwassers von einem im Brennstoffzellenheizgerät (1) erwärmten Wärmeträgermedium durchströmt wird.

10. Anlage gemäß Anspruch 6 oder 8, **dadurch gekennzeichnet, dass** der Warmwasserspeicher (2, 3) mit dem Brennstoffzellenheizgerät (1) und Zusatzheizgerät (4) über eine hydraulische Weiche (7) verbunden ist.

## Claims

1. A system of simultaneous production of electrical and thermal energy by means of a fuel cell heating device (1), preferably with a reformer for producing a hydrogen rich process gas of hydrocarbons, and a device for storing thermal energy for service water and for heating, **characterised in that** the device for storing thermal energy comprises at least two hot water tanks (2, 3) with integrated heat exchangers (5, 6), with the at least two hot water tanks (2, 3) with integrated heat exchangers (5, 6) being connected in parallel with the fuel cell heating device (1) and being connected in series with respect to the throughflow of service water.

2. A system in accordance with Claim 1, **characterised in that** a hydraulic switch (7) is provided between the fuel cell heating device (1) and at least one hot water tank (3)

3. A system in accordance with Claim 2, **characterised in that** the hot water tank (2) on the intake side of the service water has a greater storage volume than the hot water tank (3) on the output side of the service water.

4. A system in accordance with any of the Claims 1 to 3, **characterised in that** a fuel gas or oil operated supplementary heater (4) is integrated.

5. A system in accordance with Claim 4, **characterised in that** the heat exchanger (6) of the hot water tank (3) on the output side of the service water is passed through by a heat transfer medium heated by the supplementary heater (4).

6. A system in accordance with Claim 4 or 5, **characterised in that** the heat exchanger (6) of the hot water tank (3) on the output side of the service water is passed through by a heat transfer medium heated in the fuel cell heating device (1).

7. A system in accordance with any of the Claims 2 to 6, **characterised in that** the heat exchanger (5) of the hot water tank (2) on the input side of the service water is passed through by a heat transfer medium heated by the fuel cell heating device (1).

8. A system in accordance with any of the Claims 4 to 6, **characterised in that** the heat exchanger (5) of the hot water tank (2) on the input side of the service water is passed through by a heat transfer medium heated by the supplementary heater (4).

9. A system in accordance with any of the Claims 2 to 6, **characterised in that** the storage volume (8) of the hot water tank (2) on the input side of the service water is passed through by a heat transfer medium heated by the fuel cell heating device (1).

10. A system in accordance with Claim 6 or 8, **characterised in that** the hot water tank (2, 3) is connected with the fuel cell heating device (1) and the supplementary heater (4) via a hydraulic switch (7).

## Revendications

1. Installation pour la production simultanée d'énergie électrique et thermique avec un appareil de chauffage à piles à combustible (1), de préférence avec un reformeur pour la fabrication de gaz opératoire riche en hydrogène à partir d'hydrocarbures et un dispositif pour l'accumulation d'énergie thermique pour l'eau sanitaire et le chauffage, **caractérisée en ce que** le dispositif pour l'accumulation d'énergie thermique comprend au moins deux réservoirs d'eau chaude (2, 3) avec échangeurs thermiques intégrés (5, 6), les au moins deux réservoirs d'eau chaude (2, 3) avec échangeurs thermiques intégrés (5, 6) étant reliés en parallèle à l'appareil de chauffage à piles à combustible (1) et étant montés en série en ce qui concerne le passage d'eau sanitaire.

2. Installation selon la revendication 1, **caractérisée en ce qu'**un dispositif de séparation hydraulique (7) est disposé entre l'appareil de chauffage à piles à combustible (1) et au moins un réservoir d'eau chaude (3).

3. Installation selon la revendication 2, **caractérisée en ce que** le réservoir d'eau chaude (2) du côté entrée de l'eau sanitaire dispose d'un volume d'accumulation supérieur au réservoir d'eau chaude (3) du côté sortie de l'eau sanitaire.

4. Installation selon l'une quelconque des revendications 1 à 3, **caractérisée en ce qu'**un appareil de chauffage supplémentaire (4) fonctionnant au gaz combustible ou au mazout est intégré.

5. Installation selon la revendication 4, **caractérisée en ce que** l'échangeur thermique (6) du réservoir d'eau chaude (3) du côté sortie de l'eau sanitaire est parcouru par un milieu caloporteur chauffé dans l'appareil de chauffage supplémentaire (4).

6. Installation selon la revendication 4 ou 5, **caractérisée en ce que** l'échangeur thermique (6) du réservoir d'eau chaude (3) du côté sortie de l'eau sanitaire est parcouru par un milieu caloporteur chauffé dans l'appareil de chauffage à piles à combustible (1).

7. Installation selon l'une quelconque des revendications 2 à 6, **caractérisée en ce que** l'échangeur thermique (5) du réservoir d'eau chaude (2) du côté entrée de l'eau sanitaire est parcouru par un milieu caloporteur chauffé dans l'appareil de chauffage à piles à combustible (1).

8. Installation selon l'une quelconque des revendications 4 à 6, **caractérisée en ce que** l'échangeur thermique (5) du réservoir d'eau chaude (2) du côté entrée de l'eau sanitaire est parcouru par un milieu caloporteur chauffé dans l'appareil de chauffage supplémentaire (4).

9. Installation selon l'une quelconque des revendications 2 à 6, **caractérisée en ce que** le volume d'accumulation (8) du réservoir d'eau chaude (2) du côté entrée de l'eau sanitaire est parcouru par un milieu caloporteur chauffé dans l'appareil de chauffage à piles à combustible (1).

10. Installation selon la revendication 6 ou 8, **caractérisée en ce que** le réservoir d'eau chaude (2, 3) est relié à l'appareil de chauffage à piles à combustible (1) et à l'appareil de chauffage supplémentaire (4) par le biais d'un dispositif de séparation hydraulique (7).
